Europäisches Patentamt

European Patent Office

Office européen des brevets

(19)

(11) Veröffentlichungsnummer: **0 149 284**
**B1**

(12) # EUROPÄISCHE PATENTSCHRIFT

(45) Veröffentlichungstag der Patentschrift:
**09.03.88**

(21) Anmeldenummer: **84201942.4**

(22) Anmeldetag: **24.12.84**

(51) Int. Cl.⁴: **H 04 B 17/00**, H 04 B 3/46,
H 04 L 1/24

(54) **Verfahren zur Fehlerortung.**

(30) Priorität: **19.01.84 DE 3401685**

(43) Veröffentlichungstag der Anmeldung:
**24.07.85 Patentblatt 85/30**

(45) Bekanntmachung des Hinweises auf die Patenterteilung:
**09.03.88 Patentblatt 88/10**

(84) Benannte Vertragsstaaten:
**DE FR GB IT SE**

(56) Entgegenhaltungen:
**EP - A - 0 094 902**
**DE - A - 2 844 071**
**DE - A - 3 027 755**
**DE - A - 3 223 100**

(73) Patentinhaber: **Philips Patentverwaltung GmbH,
Wendenstrasse 35 Postfach 10 51 49,
D-2000 Hamburg 1 (DE)**

(84) Benannte Vertragsstaaten: **DE**

(73) Patentinhaber: **N.V. Philips' Gloeilampenfabrieken,
Groenewoudseweg 1, NL-5621 BA Eindhoven (NL)**

(84) Benannte Vertragsstaaten: **FR GB IT SE**

(72) Erfinder: **Levin, Horst, Dipl.-Ing., Leitmeritzer Strasse 14,
D-8560 Lauf (DE)**

(74) Vertreter: **Peuckert, Hermann, Dipl.-Ing. et al, Philips
Patentverwaltung GmbH
Wendenstrasse 35 Postfach 10 51 49,
D-2000 Hamburg 1 (DE)**

## Beschreibung

Die Erfindung betrifft ein Verfahren zur Fehlerortung nach dem Oberbegriff des Anspruchs 1.

Ein Fehlerortungsverfahren, bei dem die Fehlerortung während des Betriebes einer digitalen Übertragungsstrecke vorgenommen werden kann, ist aus der DE-A-30 27 755 bekannt. Bei diesem Verfahren wird das in einem fehlererkennenden Code codierte Übertragungssignal in den Zwischenregeneratoren der bidirektionalen Übertragungsstrecke ständig überwacht. Jeder Zwischenregenerator sendet periodisch ein sogenanntes Telemetriesignal aus, das z.B. Informationen über die Rate der Codefehler im Nutzsignal enthält. Beginnend beim ersten Zwischenregenerator der Übertragungsstrecke, dessen Telemetriesignal z.B. automatisch nach gleichen Zeitabständen ausgesendet wird, hängt der zweite Zwischenregenerator sein Telemetriesignal an das des ersten Zwischenregenerators an. Jeder nachfolgende Zwischenregenerator verfährt in ähnlicher Weise, indem er sein Telemetriesignal an das Ende der empfangenen Telemetriesignale anfügt.

Die Auswertung der so entstandenen Telemetriesignalkette erfolgt durch ein Ortungsgerät in der Endstelle; es zählt unter anderem die aneinander gereihten Telemetriesignale durch und stellt auf diese Weise eine Zuordnung der empfangenen Informationen zu den einzelnen Zwischenregeneratoren her.

Die Übertragung der Telemetriesignale erfolgt in einem Frequenzbereich, der unter dem Frequenzbereich liegt, in den das Spektrum des Nutzsignales fällt. Beide Signale können deshalb gleichzeitig ohne gegenseitige Störung über den Signalweg übertragen und anschliessend voneinander getrennt werden.

Die Realisierung des bekannten Verfahrens erfordert jedoch einen hohen Geräteaufwand, vor allem in den Zwischenregeneratoren. Solcher Aufwand ist nur bei Breitbandsystemen gerechtfertigt.

Mit weniger Aufwand zu realisieren sind dagegen Fehlerortungsverfahren, bei denen eine Fehlerortung nur möglich ist, solange die normale Übertragung unterbrochen wird. Es handelt sich bei diesen Verfahren meist um Ortungsverfahren mit Schleifenschluss in den Zwischenregeneratoren. Ein adressenfreies Ortungsverfahren mit Schleifenschluss ist in der DE-B-29 04 076 beschrieben. Bei ihm werden die Schalter, die in den Zwischenregeneratoren den Schleifenschluss herstellen, sowie die Schalter, die die Weiterleitung der Signale zum nächsten Zwischenregenerator unterbrechen, durch Schaltsignale gesteuert, die für alle Zwischenregeneratoren gleich sind. Die Schaltsignale unterscheiden sich nur in ihrem Informationsgehalt vom Nutzsignal. Eine gleichzeitige ungestörte Übertragung von Schalt- und Nutzsignalen ist schon aus diesem Grunde nicht möglich.

Möglich ist jedoch, gemeinsam mit dem Nutzsignal z.B. Steuersignale von einer Endstelle an die Zwischenregeneratoren zu übertragen, wenn man das in der DE-A-31 33 724 beschriebene Verfahren anwendet. Bei diesem Verfahren wird die Phase der Impulse des Nutzsignales durch ein niederfrequentes Steuersignal moduliert (verjittert). Die Wiedergewinnung des niederfrequenten Steuersignales in den Zwischenregeneratoren erfolgt ohne weiteres mit den zur Taktrückgewinnung vorhandenen Phasenregelkreisen.

Der Erfindung liegt die Aufgabe zugrunde, ein Fehlerortungsverfahren anzugeben, das während des normalen Betriebes der Übertragungsstrecke vorgenommen werden kann und zu dessen Durchführung ein Schaltungsaufwand erforderlich ist, der vergleichbar ist mit dem Aufwand für Fehlerortungsverfahren mit Schleifenschluss.

Die Lösung dieser Aufgabe wird mit den Massnahmen erreicht, die dem Kennzeichen des Anspruchs 1 zu entnehmen sind. Vorteilhafte Ausgestaltungen und Weiterbildungen des erfindungsgemässen Verfahrens sind in den Unteransprüchen angegeben.

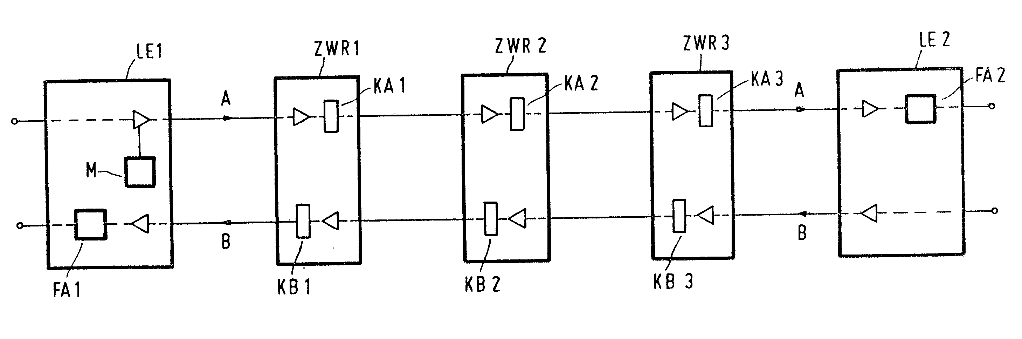

Anhand der Figur soll ein Ausführungsbeispiel der Erfindung näher erläutert werden.

Die Figur zeigt einen Digitalsignal-Grundleitungsabschnitt mit z.B. drei Zwischenregeneratoren ZWR1, ZWR2, ZWR3 und den beiden Endstellen LE1 und LE2. Die Übertragung des Nutzsignales erfolgt in beiden Richtungen in einem fehlererkennenden Übertragungscode. Für jede Richtung ist in den Zwischenregeneratoren ZWR1 bis ZWR3 ein Regenerator vorgesehen, durch den die Impulse des Nutzsignales regeneriert werden. Hierfür ist die Rückgewinnung des Übertragungstaktes erforderlich, die üblicher Weise mit Hilfe eines Phasenregelkreises vorgenommen wird.

In den Endstellen LE1 und LE2 werden die ankommenden Nutzsignale durch Einheiten FA1 und FA2 auf Codefehler überprüft und es wird die Codefehlerrate bestimmt. Erfindungsgemäss gehört zu jedem Regenerator eines Zwischenregenerators – also für jede Übertragungsrichtung – eine Korrektureinrichtung (KA1 bis KA3 und KB1 bis KB3). Ein unzulässiges Codeelement wird von der Korrektureinrichtung durch ein beliebiges zulässiges Codeelement ersetzt. Nach Durchlaufen der Codeeinrichtung ist das Nutzsignal daher frei von Codierungsfehlern, jedoch bleiben nennenswerte Informationsverfälschungen im allgemeinen erhalten. Wichtig ist, dass die Korrektureinrichtung keine zusätzliche nennenswerte Informationsverfälschung bewirkt, so dass ihre Einschaltung – versehentlich oder nicht – ohne Folgen für den Informationsfluss bleibt.

Wird als Übertragungscode der HDB3-Code verwendet, so kann die Korrektureinrichtung aus der Serienschaltung eines HDB3-Decoders und eines entsprechenden Coders besehen.

Stellt nun z.B. die Endstelle LE1 einen Anstieg der Codefehlerrate in dem aus Richtung B kommenden Nutzsignal fest, so moduliert sie mit einer Vorrichtung M dem in Richtung A abgehenden Nutzsignal Schaltsignale auf, mit denen zunächst die beiden Korrektureinrichtungen KA1 und KB1 des Zwischenregenerators ZWR1 eingeschaltet werden. Sinkt daraufhin die Codefehlerrate des aus Richtung B kommenden Nutzsignales nicht, so muss der Fehlerort zwischen der Korrektureinrichtung KB1 und der Einheit FA1 liegen.

Sinkt die Fehlerrate, so liegt der Fehlerort hinter der Korrektureinrichtung KB1. Werden nun die Korrektureinrichtungen des ersten Zwischenregenerators ZWR1 abgeschaltet und die des Zwischenregenerators ZWR2 eingeschaltet, so lässt sich z.B. am Ansteigen der Fehlerrate auf ihren anfänglichen Wert erkennen, dass der Fehlerort zwischen der Korrektureinrichtung KB1 und der Korrektureinrichtung KB2 liegen muss.

Ähnliche Schlussfolgerungen lassen sich ziehen, wenn auf die geschilderte Weise nacheinander alle Korrektureinrichtungen einer Übertragungsstrecke ein- und anschliessend ausgeschaltet werden.

Durch das gleichzeitige Einschalten der Korrektureinrichtungen für beide Richtungen der Übertragungsstrecke ist es auch möglich, Fehlerorte im Übertragungsweg der Richtung A festzustellen. In diesem Fall muss die Änderung der Fehlerrate im Nutzsignal verfolgt werden, das aus der Richtung A bei der Endstelle LE2 ankommt.

Wird z.B. von der Endstelle LE1 aus die Korrektureinrichtung KA1 im ersten Zwischenregenerator eingeschaltet und sinkt nun die Fehlerrate, so liegt die Fehlerquelle zwischen der Endstelle LE1 und der Korrektureinrichtung KA1. Ist in der Endstelle LE2 kein Rückgang der Fehlerrate festzustellen, so wird die bisher wirksame Korrektureinrichtung KA1 aus- und die nächste Korrektureinrichtung KA2 eingeschaltet. Auf entsprechende Weise wird fortgefahren, bis eine Abnahme der Fehlerrate auftritt und damit der Fehlerort ermittelt ist.

Für die Fehlerortung im Übertragungsweg der Richtung A muss ein Informationsaustausch zwischen den beiden Endstellen möglich sein, damit die Massnahmen koordiniert werden können, die zur Fehlerortung erforderlich sind. Dieser Informationsaustausch ist nicht notwendig, wenn die zweite Endstelle LE2 ebenso ausgerüstet ist wie die erste. Dann kann die Fehlerortung im Übertragungsweg der Richtung A auch von der zweiten Endstelle LE2 aus vorgenommen werden.

Die Realisierung des erfindungsgemässen Verfahrens erfordert für jeden Regenerator zunächst einen steuerbaren Umschalter, mit dem das Nutzsignal über die zugehörige Korrektureinrichtung geleitet wird. Der Umschalter wird durch die Schaltsignale gesteuert, die dem Nutzsignal in einer Endstelle aufmoduliert worden sind. Für die Rückgewinnung der Schaltsignale in den Regeneratoren oder Zwischenregeneratoren sind keine besonderen Mittel nötig, wenn das Nutzsignal phasenmoduliert worden ist. In diesem Fall sind die Schaltsignale unmittelbar der Steuerspannung zu entnehmen, mit der der Oszillator des ohnehin vorhandenen Phasenregelkreises gesteuert wird. Dabei ist vorausgesetzt, dass die Spektren der Schaltsignale in den Durchlassbereich der als Filter angesehenen Phasenregelkreise fallen. Auch die Korrektureinrichtungen sind ohne viel Aufwand als Serienschaltungen eines Decoders und eines Coders realisierbar. Handelt es sich beim Leitungscode um den HDB3-Code, so sind Coder und Decoder als integrierte Bausteine erhältlich.

Geringen Aufwand erfordert auch die Phasenmodulation des Nutzsignales in einer Endstelle. Der Oszillator des auch in den Endstellen schon vorhandenen Phasenregelkreises braucht zu diesem Zweck lediglich phasenmodulierbar ausgeführt zu werden.

Ist in den Endstellen eine Überwachung der Übertragungsstrecke durch Bestimmung der Codefehlerrate vorgesehen, so kann die zugehörige Überwachungsvorrichtung gleichzeitig für die erfindungsgemässe Fehlerortung verwendet werden. Die Ausnutzung schon vorhandener Einrichtungen ist der wichtigste Grund für den geringen Aufwand bei der Realisierung des erfindungsgemässen Fehlerortungsverfahrens.

Gegenüber den Fehlerortungsverfahren mit Schleifenschluss, die bezüglich des Schaltungsaufwandes mit dem vorliegenden Verfahren vergleichbar sind, ergeben sich jedoch noch weitere Vorteile. Bei der Fehlerortung nach einem Verfahren mit Schleifenschluss müssen spezielle Fehlerortungssignale erzeugt werden, die sich z.B. durch periodisch auftretende Bitmuster vom Nutzsignal unterscheiden. Die Fehlerortung findet daher bei diesen Verfahren – im Gegensatz zum erfindungsgemässen Verfahren – nicht unter Betriebsbedingungen statt. Daher werden bei den bekannten Verfahren die Fehlerquellen bei der Fehlerortung übersehen, die nur unter Betriebsbedingungen auftreten.

Schliesslich bedeutet die Phasenmodulation des Nutzsignales beim erfindungsgemässen Verfahren eine zusätzliche Belastung der Übertragungsstrecke. Wählt man die Modulationsfrequenzen derart, dass diese Belastung möglichst gross wird, so können bei der Fehlerortung solche Einheiten fehlerhaft arbeiten und als Fehlerquellen lokalisiert werden, die ohne die zusätzliche Belastung gerade noch funktionsfähig sind. Das erfindungsgemässe Verfahren ermöglicht somit auch die Lokalisierung von schadhaften Einheiten, deren Schaden noch zu keiner oder nur zu einer vorübergehenden Funktionsstörung während des Normalbetriebes geführt hat.

**Patentansprüche**

1. Verfahren zur Fehlerortung für eine im Betrieb befindliche digitale Übertragungsstrecke, wobei

a) zwischen den beiden Endstellen (LE1, LE2) der Übertragungsstrecke mindestens ein Regenerator (ZWR1) liegt,

b) das Nutzsignal in einem Code codiert ist, der die Erkennung von Codefehlern zulässt,

c) eine Modulation des Nutzsignales durch Veränderung einer oder mehrerer seiner Kenngrössen möglich ist, ohne dass dadurch die Übertragung gestört wird,

d) das in einer Endstelle (LE1, LE2) ankommende Nutzsignal auf Codefehler überprüft wird und die Fehlerrate bestimmt wird, dadurch gekennzeichnet,

e) dass jeder Regenerator (ZWR1 ... ZWR3) eine einschaltbare Korrektureinrichtung (KA1, KB1 ... KA3, KB3) enthält, die im eigenschalteten Zustand ein unzulässiges Codeelement im Nutzsignal durch ein beliebiges zulässiges Codeelement ersetzt,

f) dass dem von einer Endstelle (LE1, LE2) abgehenden Nutzsignal Schaltsignale aufmoduliert werden, wenn die Fehlerrate des an einer Endstelle (LE1, LE2) ankommenden Nutzsignales ansteigt,

g) dass mit den Schaltsignalen nacheinander die Korrektureinrichtungen (KA1, KB1...KA3, KB3) der Regeneratoren (ZWR1 ...ZWR3) ein- und ausgeschaltet werden und dass der Fehlerort an der Änderung der Fehlerrate des an einer Endstelle (LE1, LE2) ankommenden Nutzsignales erkannt wird.

2. Verfahren nach Anspruch 1, dadurch gekennzeichnet, dass die Korrektureinrichtungen (KA1, KB1...KA3, KB3) der Regeneratoren (ZWR1...ZWR3) durch adressenlose Schaltsignale ein- und ausgeschaltet werden.

3. Verfahren nach Anspruch 1, dadurch gekennzeichnet, dass die Korrektureinrichtungen (KA1, KB1...KA3, KB3) der Regeneratoren (ZWR1...ZWR3) mit Adressen versehenen Schaltsignalen ein- und ausgeschaltet werden.

4. Verfahren nach einem der vorhergehenden Ansprüche, dadurch gekennzeichnet, dass als Korrektureinrichtung (KA1, KB1...KA3, KB3) die Serienschaltung eines Decoders und eines Coders verwendet wird.

5. Verfahren nach einem der vorhergehenden Ansprüche, dadurch gekennzeichnet, dass das Nutzsignal phasenmoduliert wird.

**Revendications**

1. Procédé de localisation de défauts pour un circuit de transmission numérique en service, dans lequel:

a) entre les deux postes terminaux (LE1, LE2) du circuit de transmission se trouve au moins un régénérateur (ZWR1),

b) le signal utile est codé en un code qui permet l'identification de défauts de codage,

c) une modulation du signal utile est possible par modification d'un ou de plusieurs de ses paramètres, sans que la transmission soit de ce fait perturbée,

d) le signal utile parvenant dans un poste terminal (LE1, LE2) est vérifié pour détecter les défauts de codage et la fréquence des défauts est déterminée, caractérisé en ce que:

e) chaque régénérateur (ZWR1...ZWR3) contient un dispositif de correction enclenchable (KA1, KB1...KA3, KB3) qui, dans l'état enclenché, remplace un élément de code inadmissible dans le signal utile par un élément de code admissible quelconque,

f) des signaux de commutation sont modulés sur le signal utile provenant d'un poste terminal (LE1, LE2) lorsque la fréquence des défauts du signal utile parvenant à un poste terminal (LE1, LE2) augmente,

g) à l'aide des signaux de commutation, les dispositifs de correction (KA1, KB1...KA3, KB3) des régénérateurs (ZWR1...ZWR3) sont successivement enclenchés et déclenchés et le lieu du défaut est identifié par la modification de la fréquence de défauts du signal utile parvenant à un poste terminal (LE1, LE2).

2. Procédé suivant la revendication 1, caractérisé en ce que les dispositifs de correction (KA1, KB1...KA3, KB3) des régénérateurs (ZWR1...ZWR3) sont enclenchés et déclenchés par des signaux de commutation sans adresse.

3. Procédé suivant la revendication 1, caractérisé en ce que les dispositifs de correction (KA1, KB1...KA3, KB3) des régénérateurs (ZWR1 ...ZWR3) sont enclenchés et déclenchés par des signaux de commutation pourvus d'adresses.

4. Procédé suivant l'une quelconque des précédentes, caractérisé en ce qu'à titre de dispositif de correction (KA1, KB1...KA3, KB3), on utilise le montage en série d'un décodeur et d'un codeur.

5. Procédé suivant l'une quelconque des revendications précédentes, caractérisé en ce que le signal utile est modulé en phase.

**Claims**

1. A system for fault location for a digital transmission path under operating conditions, in which:

a) no less than one regenerator (ZWR1) is inserted between the two terminating units (LE1, LE2) of the transmission path,

b) the useful signal is encoded in a code which allows recognition of code errors,

c) a modulation of the useful signal is possible by changing one or a plurality of its characteristics without disturbing the transmission,

d) the useful signal arriving at a terminating unit (LE1, LE2) is checked for code errors and the error rate is determined, characterized in that,

e) each regenerator (ZWR1...ZWR3) comprises a correcting arrangement (KA1, KB1...KA3, KB3) which, when connected, substitutes any permissible code element for an impermissible code element in the useful signal,

f) that switching signals are modulated on a useful signal coming from a terminating unit (LE1, LE2), if there is a rising fault rate of the useful signal arriving at a terminating unit (LE1, LE2),

g) that the correcting arrangements (KA1, KB1...KA3, KB3) of the regenerators (ZWR1...ZWR3) are consecutively switched on and off by means of the switching signals and that the location of the fault is recognised from the change in the fault rate of a useful signal arriving at a terminating unit (LE1, LE2).

2. A system as claimed in Claim 1, characterized in that the correcting arrangements (KA1, KB1...KA3, KB3) of the regenerators (ZWR1...ZWR3) are switched on and off by means of adressless switching signals.

3. A system as claimed in Claim 1, characterized in that the correcting arrangements (KA1, KB1...KA3, KB3) of the regenerators (ZWR1...ZWR3) are switched on and off by means of addressed switching signals.

4. An arrangement as claimed in any of the preceding Claims, characterized in that the series arrangement of a decoder and a coder is used as a correcting arrangement (KA1, KB1...KA3, KB3).

5. A system as claimed in any of the preceding Claims characterized in that the useful signal is phase-modulated.

LE1  ZWR1  ZWR2  ZWR3  LE2

KA1  KA2  KA3  FA2

A  A

M

B  B

FA1  KB1  KB2  KB3